# EUROPÄISCHE PATENTSCHRIFT

(11) **EP 2 184 412 B1**
(45) Veröffentlichungstag und Bekanntmachung des Hinweises auf die Patenterteilung: **23.09.2015**
(21) Anmeldenummer: 08405276.0
(22) Anmeldetag: 07.11.2008
(51) Int. Cl.: E03C 1/02, F16L 23/028

(54) **Fluidführende Vorrichtung**
Fluid-flowing device
Dispositif conducteur de fluide

(43) Veröffentlichungstag der Anmeldung: 12.05.2010
(73) Patentinhaber: R. Nussbaum AG, 4601 Olten (CH)
(72) Erfinder: Bobst, Urs, 4703 Kestenholz (CH); Näf, Andreas, 5000 Arau (CH); Wullschleger, Thomas, 3360 Herzogenbuchsee (CH)
(74) Vertreter: Rüfenacht, Philipp Michael

(56) Entgegenhaltungen:
- EP-A- 0 085 329
- DE-U1- 8 518 188
- FR-A- 2 634 537
- US-A- 4 633 913
- US-A- 4 733 889
- US-A- 5 351 996
- US-A1- 2007 226 899

## Beschreibung

### Technisches Gebiet

Die Erfindung betrifft eine fluidführende Vorrichtung und ein Verfahren zur Montage der Vorrichtung gemäß dem Oberbegriff des Anspruchs 1 bzw. 13.

### Stand der Technik

In der Sanitärtechnik werden zur Befestigung von fluidführenden Teilen, insbesondere von Rohren oder Anschlussstücken von Armaturen, an Wänden oder dergleichen, Halteteile eingesetzt, die die fluidführenden Teile zumindest teilweise umschliessen. Zur einfacheren Montage bestehen die Halteteile dabei meistens aus mehreren Teilen, die um das fluidführende Teil montiert werden und das fluidführende Teil festhalten. Diese Einzelteile werden dabei entweder mittels Schrauben, Nieten oder dergleichen zusammengehalten oder sie werden verklebt oder verschweisst. Auch kommen Kabelschellen zum Einsatz, die den fluidführenden Teil umschliessen und die mittels eines Schraubmechanismus zusammengezogen werden können und dadurch den fluidführenden Teil festhalten.

Schrauben- und Nietenverbindungen können sich lockern und Klebstoffe können sich zersetzen, dadurch kann sich die Verbindung lösen. Das Verschweissen von Einzelteilen ergibt zwar eine beständigere Verbindung, es ist aber aufwändig und teuer. Zudem sind verschweisste Verbindungen kaum wieder lösbar. Das Trennen von verschweissten Verbindungen kann nur unter Zerstörung der Einzelteile erfolgen.

Die Dokumente US4633913, FR2634537, DE8518188U, US4733889, EP0085329 und US5351996 offenbaren bekannte fluidführende Vorrichtungen.

Das Dokument US-A-4 633 913 entspricht dem Oberbegriff des Anspruchs 1 und wird als nächstliegender Stand der Technik angesehen.

### Darstellung der Erfindung

Aufgabe der Erfindung ist es, eine dem eingangs genannten technischen Gebiet zugehörende Vorrichtung zu schaffen, welche einfach zusammensetzbar ist und ein sicheres Halten des fluidführenden Teils durch den Halteteil ermöglicht.

Die Lösung der Aufgabe ist durch die Merkmale des Anspruchs 1 definiert. Gemäss der Erfindung umfasst der Halteteil mindestens zwei Halteschalen, und der feste fluidführende Teil ist von diesen Halteschalen umschlossen. Die Halteschalen werden mittels mindestens zwei Halteringen mechanisch zusammengehalten. Mit Umschliessen ist in diesem Zusammenhang gemeint, dass eine Mantelfläche des fluidführenden Teils vom Halteteil in einem zusammenhängenden umlaufenden Bereich überdeckt wird, wobei aber andere Bereiche der Mantelfläche nicht vom Halteteil überdeckt sein müssen.

Die Halteschalen werden zum Halteteil zusammengefügt. Dabei umschliessen sie das fluidführende Teil. Danach werden die Halteringe eingesetzt, mit Vorteil eingepresst. Die Halteringe halten in der Folge das Halteteil mechanisch zusammen.

Durch die erfindungsgemässe Lösung ergibt sich eine höhere Lebensdauer, da sich weder Schrauben lösen können noch ein Klebstoff seine Wirkung verlieren kann. Zur Montage sind auch nicht zwingend zusätzliche Werkzeuge, wie Schraubenzieher oder Schweisswerkzeuge nötig. Die Montage kann durch eine Fachperson einfach und schnell ausgeführt werden. Zudem kann eine solche Vorrichtung derart ausgebildet werden, dass sie nicht zerstörungsfrei demontierbar ist. Die Vorrichtung kann nämlich beispielsweise derart ausgebildet sein, dass kein Spalt vorhanden ist, der einen Zugriff auf die Halteringe ermöglichen würde.

Mit Vorteil ist zwischen den Halteschalen und dem fluidführenden Teil eine Schicht geringer Härte, insbesondere eine schalldämmende Schicht, vorhanden. Dadurch kann die Schallausbreitung über den fluidführenden Teil und den Halteteil eingedämmt werden. Das Leitungssystem, welchem der fluidführende Teil angehört wird somit vom Element, an welchem der fluidführende Teil befestigt ist, zum Beispiel einer Wand, akustisch entkoppelt.

Alternativ können andere Schichten verschiedener Härte vorhanden sein, die unterschiedliche Funktionen erfüllen, insbesondere zur Wärme- oder Kältedämmung dienen. Es ist auch möglich, gänzlich auf eine solche Schicht zu verzichten.

Mit Vorteil ist die Vorrichtung eine Anschlussdose zur Montage von sanitären Armaturen. Anschlussdosen ermöglichen ein einfaches Einbauen eines Leitungssystems in ein Gebäude oder dergleichen, wobei eine spätere Montage einer sanitären Armatur ermöglicht wird.

Mit Vorteil ist die Anschlussdose als Doppeldose ausgebildet. Das heisst, dass insgesamt drei Anschlüsse, nämlich eine Zuleitung und zwei Ableitungen, vorgesehen sind. Eine der Ableitungen führt zu einer an der Anschlussdose angebrachten Armatur, über die andere Ableitung wird die Leitung weitergeführt. Dadurch kann die Anschlussdose in Serie in ein Leitungssystem eingebaut werden.

Alternativ kann die Anschlussdose auch als Einzeldose ausgebildet sein.

Alternativ kann die Vorrichtung andere Befestigungsteile von fluidführenden Systemen beinhalten. Es ist auch vorstellbar, dass die Vorrichtung zum Verbinden von Teilsystemen eines fluidführenden Systems eingesetzt wird. Anwendbar ist die Erfindung zudem ebenfalls auf Unterputzarmaturen.

Mit Vorteil hat die Vorrichtung einen Steckanschluss oder einen Pressanschluss. Dies ermöglicht ein einfaches Anschliessen eines fluidführenden Leitungssystems an den fluidführenden Teil.

Alternativ sind auch Schraubverbindungen oder Schweissverbindungen vorstellbar.

Mit Vorteil sind die Halteringe flexibel, d. h. weisen eine gewisse Elastizität auf. Dadurch können die Halteringe die Halteschalen mittels einer mechanischen Vorspannung zusammenhalten. Bei einer besonderen Ausführungsform besitzen die Halteringe ein Formgedächtnis (Memoryeffekt). Mit Formgedächtnis ist gemeint, dass die Halteringe unter einem äusseren Einfluss, zum Beispiel Erwärmen, eine vorbestimmte Geometrie und Dimension einnehmen, die die Halteringe auch nach dem Wegfallen der äusseren Einwirkung beibehalten.

Alternativ können die Halteringe im Wesentlichen starr sein.

Mit Vorteil ist der fluidführende Teil als Rohr ausgebildet. Der Rohrdurchmesser kann je nach Anwendung variieren. Insbesondere sind die gängigen Rohrdurchmesser für fluidführende Systeme, vorzugsweise die genormten Durchmesser von ½ Zoll bis 4 Zoll, bevorzugt 1 bis 2 Zoll, sowie von 16 mm, 20 mm und 25 mm vorstellbar. Die Erfindung ist insbesondere realisierbar im Zusammenhang mit Rohrsystemen der Nennweite DN8 bis DN100, besonders DN15 bis DN50.

Auch wenn Rohre meistens einen kreisförmigen Querschnitt haben, sind auch Rohre mit anderen Querschnitten vorstellbar, insbesondere mit elliptischen, quadratischen oder rechteckigen Querschnitten.

Mit Vorteil besteht der fluidführende Teil aus Metall, vorteilhaft aus einer Kupferlegierung, insbesondere aus einer Kupferlegierung mit Si, Zn und wenigstens 80 Gew.-% Cu. Diese Kupferlegierung hat sich als beständiges Material zur Leitung von Flüssigkeiten, insbesondere von Wasser, bewährt. Sie ist auch für Heisswasser geeignet. Zudem ist diese Kupferlegierung einfach bearbeitbar und unter anderem auch schweissbar. Nähere Angaben zu dieser geeigneten Kupferlegierung finden sich in der Europäischen Patentanmeldung Nr. 08 405 146.5 vom 26. Mai 2008 (R. Nussbaum AG).

Alternativ kann das Rohr auch aus einer anderen Bronzelegierung wie zum Beispiel Rotguss bestehen. Es sind aber auch Metalle wie Edelstahl oder Kupfer oder andere Kupferlegierungen vorstellbar. In Frage kommen auch fluidführende Teile aus anderen Materialien wie zum Beispiel Kunststoff, insbesondere PPSU, PPA, PSU oder PPS. Es ist auch eine Kombination aus verschiedenen Materialien möglich.

Mit Vorteil ist der Halteteil aus Kunststoff. Dadurch lassen sich einfach und kostengünstig die unterschiedlichen Geometrien und Dimensionen der Halteteile verwirklichen. Dabei kann der Halteteil sowohl in einem Spritz- oder Pressverfahren als auch aus einem Block mechanisch zum Beispiel durch Fräsen hergestellt werden. Als Kunststoffe kommen unter anderem Polyethylen (PE), PEX, PA, POM, PP mit oder ohne Glasfaserverstärkung sowie TPE.

Alternativ kann der Halteteil auch aus anderen Materialien, wie Metall oder Keramik bestehen.

Mit Vorteil sind die Halteringe aus Kunststoff, insbesondere aus POM, PA, PE, PP oder PEX (vernetztem Polyethylen), hergestellt. Kunststoff hat den Vorteil, dass die Halteringe einfach und günstig in den unterschiedlichen Geometrien und Dimensionen ausgebildet werden können. Zudem hat PEX den Vorteil, dass die Halteringe mit einem Formgedächtnis ausgestattet werden können.

Alternativ können die Halteringe auch aus einem anderen Material, zum Beispiel einem anderen Kunststoff wie zum Beispiel PPSU, PPA, PSU oder PPS (mit oder ohne Glasfaserverstärkung), oder aus einem Metall oder aus einer Kombination aus verschiedenen Materialien bestehen.

Mit Vorteil ist die erfindungsgemässe Vorrichtung modular aufgebaut. Das heisst, dass unterschiedliche Ausführungsformen der Anschlussdose aus einer Auswahl einzelner Komponenten, wie zum Beispiel Halteteil, fluidführender Teil und Dosenfuss zusammengesetzt werden können. So können Komponenten, wie zum Beispiel ein Dosenfuss, die für verschiedene Anwendungen respektive Ausführungsformen gleich bleiben, in verschiedenen Ausführungsformen eingesetzt werden. Dabei sind Verbindungsstellen zwischen einzelnen Komponenten standardisiert, damit ein modularer Aufbau ermöglicht wird. Zum Beispiel kann ein Dosenfuss einer Einzeldosenausführung auch bei der Doppeldose eingesetzt werden. Anstatt den Dosenfuss am Halteteil zu befestigen, können zwei Dosenfüsse der gleichen Ausführungsform wie bei der Einzeldose, bei der Doppeldose an einem Verbindungsstück anstatt am Halteteil angebracht werden. Es ist ebenfalls möglich, verschiedene Typen von fluidführenden Teilen, zum Beispiel Winkel mit einer 90°-Biegung oder mit einer 45°-Biegung mit Halteteilen mit unterschiedlichen Befestigungsvorrichtungen zu kombinieren. Dies hat den Vorteil, dass Anschlussdosen je nach Bedürfnis zusammengesetzt werden können. Dabei kann auf ein bestehendes Sortiment an verschiedenen Komponenten zurückgegriffen werden, welche durch eine Komponente mit schalldämmender Wirkung erweitert wird. Insbesondere ermöglicht dies einem Fachmann, an einer Montagestelle die benötigte Ausführungsform der Anschlussdose aus einzelnen Komponenten zusammenzustellen, wobei zum Beispiel die schalldämmende Komponente ohne Mehraufwand automatisch integriert wird.

Mit Vorteil haben die Halteschalen im Wesentlichen einen Querschnitt in der Form eines Kreisringssegments, insbesondere eines Halbkreisringsegments. Der Innendurchmesser des Segments entspricht dabei im Wesentlichen dem Aussendurchmesser des zu haltenden fluidführenden Teils, ggf. inklusive zusätzlichen Elementen, die zwischen dem fluidführenden Teil und dem Halteteil angeordnet werden sollen. Dies ermöglicht ein einfaches Umschliessen eines röhrenförmigen fluidführenden Teils und ein besonders sicheres Halten des fluidführenden Teils durch den Halteteil.

Alternativ sind auch andere Querschnitte, zum Beispiel quadratische oder rechteckige Querschnitte denkbar.

Erfindungsgemäss sind an den Halteschalen Aufnahmen ausgebildet, welche die Halteringe aufnehmen können. Dabei sind Im zusammengesetzten Zustand der Vorrichtung die Aufnahmen im Bereich von freien Enden des fluidführenden Teils angeordnet. Dies hat den Vorteil, dass die Halteringe passgenau eingesetzt werden können und so eine optimale Festigkeit der Vorrichtung ermöglichen. Zudem erleichtern die Aufnahmen für die Halteringe auch das Zusammensetzten der Vorrichtung, da die Platzierung der Halteringe für einen Installateur klar ersichtlich ist. Aufnahmen, die insbesondere im Bereich von freien Enden des fluidführenden Teils angeordnet sind, sind optimal bezüglich der Festigkeit der Vorrichtung angeordnet. Durch sie werden zudem die darin aufgenommenen Halteringe von äusseren Einwirkungen (zum Beispiel UV-Strahlung) geschützt.

Alternativ können die Halteringe auch ohne speziell vorgesehene Aufnahmen die Halteschalen des Halteteils zusammenhalten, diese beispielsweise einfach aussen umschliessen.

Mit Vorteil ist die Vorrichtung eine Anschlussdose mit einem abgewinkelten, fluidführenden Teil. Dabei sind zwei Halteringe je stirnseitig, d. h. im Bereich der freien Enden des abgewinkelten fluidführenden Teils, und ein weiterer Haltering an einer Montagevorrichtung der Anschlussdose angebracht. Beim Befestigen der Anschlussdosen an einer Wand oder dergleichen, wirken die grössten Kräfte in der Umgebung der Montagevorrichtung der Anschlussdose. Das Anbringen eines Halteringes bei der Montagevorrichtung stellt deshalb sicher, dass diese Kräfte nicht dazu führen können, dass der Zusammenhalt des Halteteils beeinträchtigt wird. Den analogen Vorteil erhält man für das Anbringen von Leitungen an die Anschlussdose. In diesem Fall wirken die grössten Kräfte stirnseitig auf die Anschlussdose. Dabei können Drehmomente von 50 Nm oder mehr auftreten. Durch das stirnseitige Anbringen der Halteringe erhält die Anschlussdose die benötigte Festigkeit.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine Explosionszeichnung einer erfindungsgemässen Vorrichtung;
- Fig. 2: eine seitliche Ansicht der zusammengesetzten Anschlussdose ohne Winkel;
- Fig. 3: einen Schnitt durch die Anschlussdose mit eingesetztem Winkel; und
- Fig. 4: eine seitliche Ansicht einer Anschlussdose mit Doppeldosenfuss.

Grundsätzlich sind in den Figuren gleiche Teile mit gleichen Bezugszeichen versehen.

### Wege zur Ausführung der Erfindung

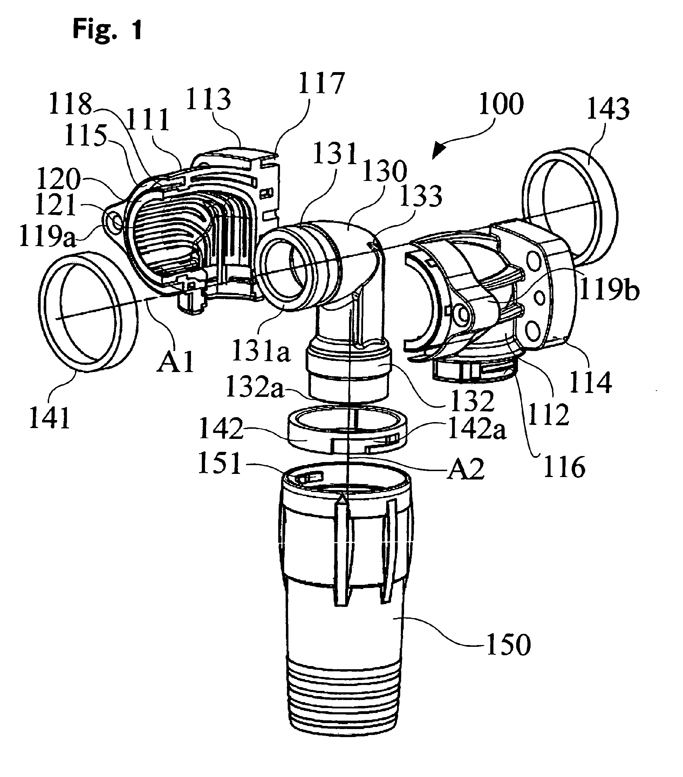

Die Figur 1 zeigt eine Explosionszeichnung einer erfindungsgemässen Vorrichtung in der Ausführungsform einer Anschlussdose 100 umfassend einen Halteteil 110, welcher aus zwei aus POM (Polyoxymethylen) gefertigten Halteschalen 111, 112 zusammengesetzt ist und auf seiner Innenseite mit einer schalldämmenden Schicht 120 versehen ist. Diese schalldämmende Schicht 120 wurde in einem 2-Komponentenverfahren aus einem thermoplastischen Elastomer (TPE) direkt auf die Innenseite der Halteschalen 111, 112 aufgespritzt, wobei die Härte dieser Schicht kleiner ist als die der Halteschalen 111, 112. Zudem umfasst die Anschlussdose 100 einen fluidführenden Teil in der Form eines Winkels 130 aus Siliciumbronze, einen ersten, zweiten und dritten Haltering 141, 142, 143 aus PEX und einen tubusförmigen Dosenfuss 150 aus Polyethylen (PE). Die einzelnen Bestandteile der Anschlussdose 100 sind wie folgt aufgebaut: Der Winkel 130 besteht aus einem ersten Teilrohr 131 mit einer ersten Symmetrieachse A1 und einem zweiten Teilrohr 132 mit einer zweiten Symmetrieachse A2, wobei die beiden Symmetrieachsen A1 und A2 einen Winkel von 90° einschliessen. Die beiden Teilrohre 131, 132 sind an einer Biegung 133 des Winkels 130 miteinander verbunden. Als Innenfläche des Winkels 130 wird im Folgenden diejenige Fläche bezeichnet, die mit einer Flüssigkeit, das im Winkel 130 geführt wird, in Kontakt kommt. Als Aussenfläche wird diejenige Fläche bezeichnet, die der Innenfläche gegenüberliegt, wobei die Stirnflächen der jeweiligen Enden 131a, 132a der Teilrohre 131, 132 nicht dazu zählen.

Die beiden Halteschalen 111, 112 sind im Wesentlichen zueinander spiegelsymmetrisch aufgebaut. Die Halteschalen 111, 112 besitzen je eine Aussparung in der Form einer Halbröhre, so ausgestaltet, dass der Winkel 130 von beiden Halbschalen 111, 112 je zur Hälfte umschlossen wird. Dadurch können insbesondere Drehmomente, entlang einer der Symmetrieachsen A1, A2, die zum Beispiel bei der Montage einer Leitung eines Leitungssystems bzw. einer Armatur am Winkel 130 entstehen, vom Halteteil 110 aufgefangen werden. Die an den Halteschalen 111, 112 angeformte schalldämmende Schicht 120 befindet sich zwischen einer Innenfläche der Aussparung der Halbschalen 111, 112 und der Aussenfläche des Winkels 130. Die dem Winkel 130 zugewandte Innenfläche 121 der schalldämmenden Schicht 120 ist mit einer Längsstrukturierung versehen. Diese Strukturierung der Innenfläche 121 ist im Wesentlichen durch Rippen gebildet, welche längs einer Flussrichtung einer Flüssigkeit im Winkel 130 verlaufen.

In Richtung der ersten Achse A1 ist im Bereich der Biegung 133 an beiden Halteschalen 111, 112 je eine Befestigungsplatte 113 bzw. 114 in der Form einer im Wesentlichen rechteckförmigen Platte angeformt, wobei die Plattenflächen senkrecht zur ersten Achse A1 stehen. Die Befestigungsplatten 113, 114 sind so ausgestattet, dass sie seitlich bei der Biegung 133 herausragen. In dem herausragenden Teil der Befestigungsplatten 113, 114 sind jeweils mehrere Löcher vorhanden, die zur Befestigung der Anschlussdose 100 mittels Schrauben (nicht gezeichnet) oder anderen geeigneten Befestigungsmitteln an einer Wand eines Gebäudes dienen können.

Die Halteschalen 111, 112 umschliessen den Winkel 130 und werden dann mittels den drei Halteringen 141, 142, 143 zusammen gehalten, wobei in den Halteschalen 111, 112 des Halteteils Aufnahmen 115, 116, 117 vorgesehen sind, die die Halteringe 141, 142,143 aufnehmen. Der erste Haltering 141 umschliesst dabei das erste Ende 131a und ist koaxial zur ersten Achse A1 angeordnet. Der zweite Haltering 142 umschliesst das zweite Ende 132a und ist koaxial zur zweiten Achse A2 angeordnet. Der dritte Haltering 143 ist ebenfalls koaxial zur ersten Achse A1 angeordnet, die Aufnahme 117 des dritten Halterings 143 befindet sich aber im Bereich der Befestigungsplatten 113, 114. Die Aufnahmen 115, 116, 117 sind als halbkreisringförmige Aussparungen in den Halteschalen 111, 112 ausgestaltet.

Am zweiten Ende 132a ist der tubusförmige Dosenfuss 150 aus Kunststoff koaxial zur zweiten Achse A2 angebracht. Dabei ist im zweiten Haltering 142 eine Nut 142a ausgenommen und am Dosenfuss eine Nase 151 vorhanden, die mit der Nut 142a eine Art Bajonettverschluss bildet.

An den Halteschalen 111, 112 sind zudem seitlich auf der Höhe des ersten Halteringes 141 Ausbuchtungen 1 19a, 1 19b mit je einem Loch vorhanden, die zu einer vorderseitigen Befestigung der Anschlussdose 100 mittels Schrauben (nicht gezeichnet) oder anderen geeigneten Befestigungsmitteln an einer Wand eines Gebäudes oder einem anderen Befestigungselement dienen können.

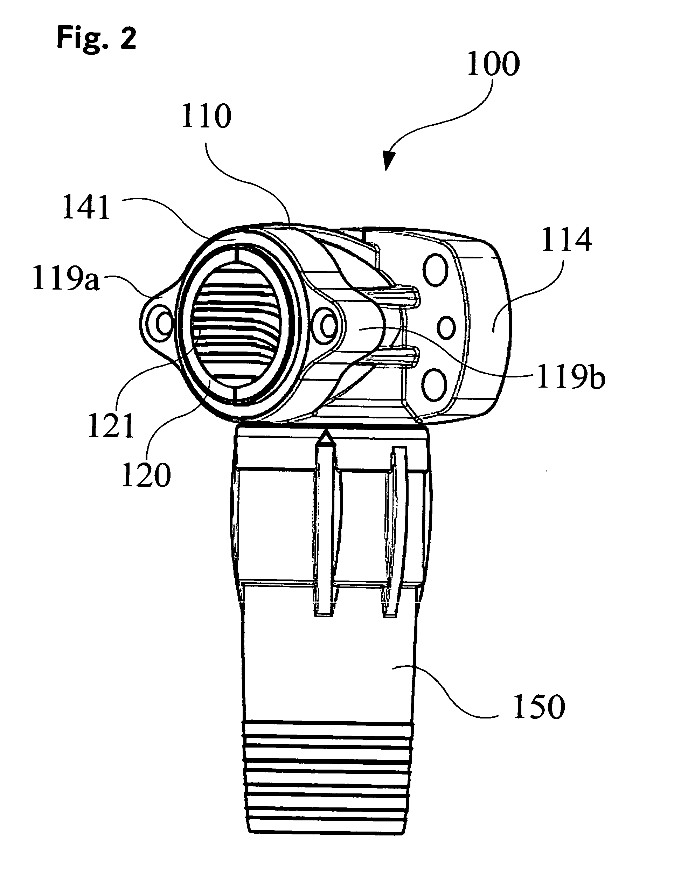

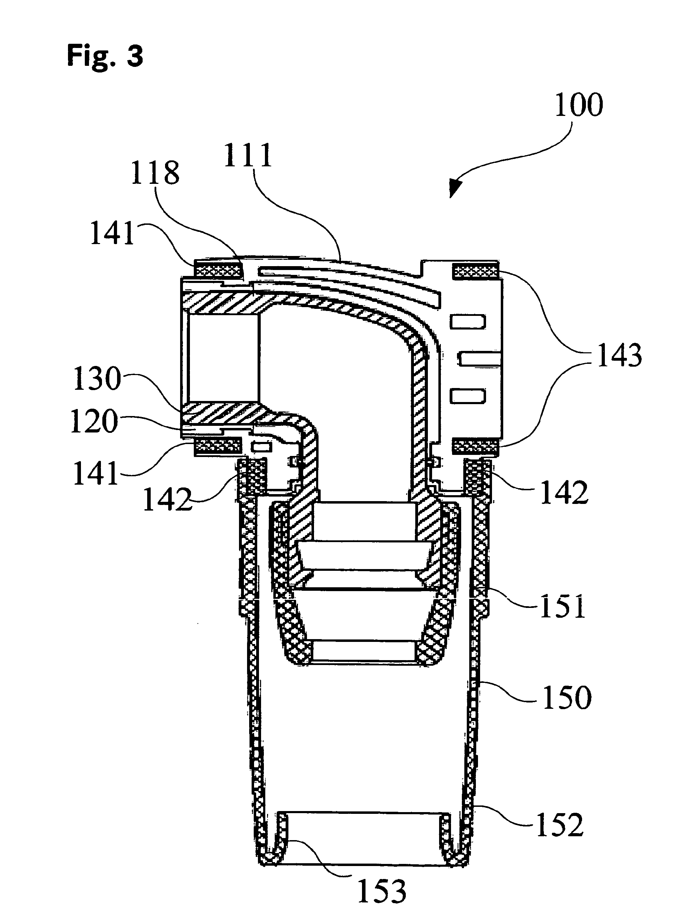

Die Figur 2 zeigt die Anschlussdose 100 der Figur 1 zusammengesetzt, aber ohne den Winkel 130. Figur 3 zeigt einen Querschnitt durch die zusammengesetzte Anschlussdose 100 mit dem Winkel 130 der Figur 1.

Die Anschlussdose 100 wird wie folgt zusammengesetzt: Die Halteschalen 111 und 112 werden passförmig aufeinander gelegt, so dass die beiden Halbröhren sich zu einer Rohrform zusammenfügen und den Winkel 130 (in Figur 2 und 3 nicht gezeichnet) umschliessen. Danach werden die drei Halteringe 141, 142, 143 in die Aufnahmen 115, 116, 117 eingesetzt. Die Abmessungen der Aussparungen des Halteteils 110, der schalldämmenden Schicht 120 und des Winkels 130 sind dergestalt, dass beim Umschliessen des Winkels 130 mit den Halteschalen 111 und 112 ein Widerstand überwunden werden muss, damit die Halteringe 141, 142, 143 in die Aufnahmen 115, 116, 117 eingesetzt werden können. Dieser Widerstand entsteht durch eine leichte Deformation der schalldämmenden Schicht 120. Da das Material der schalldämmenden Schicht 120 praktisch inkompressibel ist, wird diese Deformation durch die Strukturierung der Innenfläche der schalldämmenden Schicht 120 erst ermöglicht. Das Überwinden des Widerstandes führt zu einer Vorspannung der Anschlussdose, was zur Stabilität der Aufnahme des Winkels 130 innerhalb des Halteteils 110 beiträgt. Nach Befestigung der Anschlussleitung an der Anschlussdose 100 kann der Dosenfuss 150 über das Ende 132a des Winkels 130 gestülpt werden und am Haltering 142 mittels des Bajonettverschlusses befestigt werden.

Wie in der Figur 3 gut ersichtlich ist, ist die Dicke der schalldämmenden Schicht 120 in einer umlaufenden Region in der Nähe des ersten Endes 131a verjüngt. Der Halteteil 110 hat an dieser Stelle eine radial umlaufende Rippe 118, die die Verjüngung der schalldämmenden Schicht ausfüllt. Die Dicke der Region der schalldämmenden Schicht, die mit der Rippe 118 in Kontakt ist, beträgt circa 35 % der Dicke der benachbarten Regionen an dieser Stelle, nämlich ca. 0.5 - 0.6 mm im Unterschied zu ca. 1.5 mm. Über die kleinflächige Rippe 118 des Halteteils 110 wird eine Haltekraft ausgehend vom Haltering 141 über den Halteteil und der verjüngten schalldämmenden Schicht 120 auf den Winkel 130 übertragen. Dadurch wird der Winkel 130 zusätzlich durch den Halteteil 110, respektive den Haltering 141 stabilisiert, ohne dass die schalldämmende Wirkung der schalldämmenden Schicht beeinträchtigt wird.

Ein oberes Ende 151 des Dosenfusses 150, welches am Haltering 142 befestigt ist, weist eine dickere Wandung auf als ein unteres, freies Ende 152 des Dosenfusses 150. Durch die Verdickung der Wandung wird erreicht, dass das obere, dem Winkel zugewandten Ende 151 formstabil und das untere, dem Winkel abgewandte Ende 152 flexibel ist. Das untere Ende 152 des Dosenfusses 150 ist nach innen umgebogen, so dass ein Wulst 153 gebildet wird. Dieser Wulst 153 dient der Anpassung des Dosenfusses 150 an den Rohrdurchmesser der darin geführten Leitung.

Schwingungen, die sich entlang der Leitung des fluidführenden Leitungssystems, welche mit dem im Halteteil 110 aufgenommenen Winkel 130 verbunden ist, fortpflanzen bzw. welche im Bereich des Winkels 130 erzeugt wurden, werden von der schalldämmenden Schicht 120 gedämmt und nur in abgeschwächter Stärke über den Halteteil 110 auf die Wand übertragen. Umgekehrt übertragen sich Schallwellen, welche sich in der Wand als Schwingungen fortpflanzen, zunächst via die Befestigungsplatten 113, 114 bzw. die Ausbuchtungen 1 19a, 1 19b auf die Anschlussdose 100. Diese Schwingungen werden aber dann ebenfalls in der schalldämmenden Schicht 120 gedämmt und nur in abgeschwächter Stärke auf den Winkel 130 und damit auf das Leitungssystem übertragen.

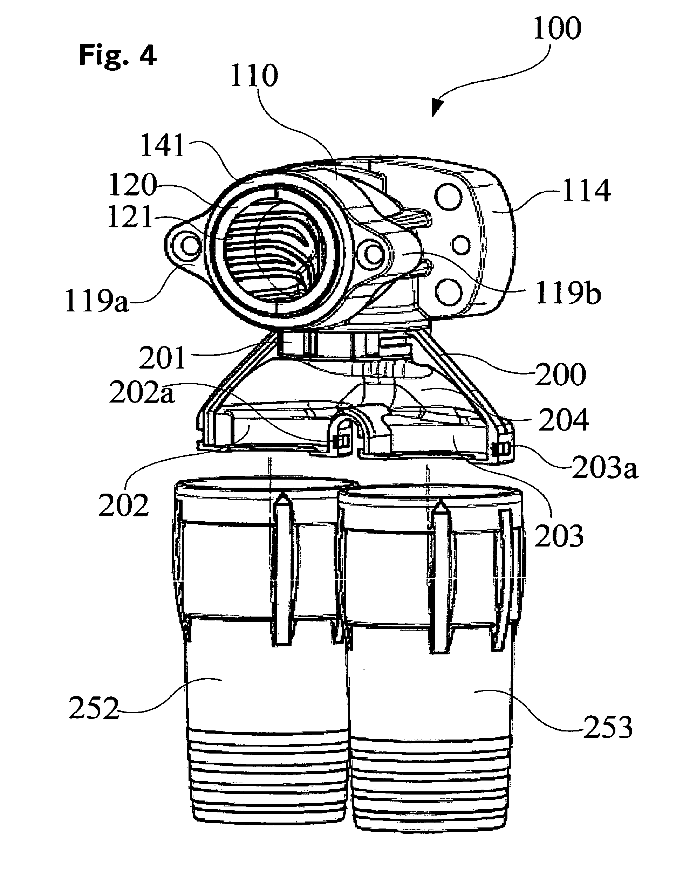

Die Figur 4 zeigt die Anschlussdose 100, wobei ein Y-förmiges Verzweigteil 200 aus POM am zweiten Ende 132a des Winkels 130 befestigt ist. Dieses Verzweigteil 200 hat am oberen Ende eine erste Öffnung 201, welche mit dem Ende 132a verbunden ist. Nach unten, dem Winkel 130 abgewandt, sind im Verzweigteil 200 deren zwei Öffnungen 202, 203 vorhanden. Alle Öffnungen 201, 202, 203 sind über einen gemeinsamen Hohlraum 204 verbunden. An den unteren Öffnungen 202, 203 kann nun je ein, dem Dosenfuss 150 identischer, Dosenfuss 252, 253 befestigt werden. Dazu ist an den beiden unteren Öffnungen 202, 203 je eine Nut 202a, 203a, die der Nut 142a entspricht, vorhanden. In diesem Sinne ist die Anschlussdose 100 modulartig aufgebaut.

In den Ausführungsbeispielen wurde die erfindungsgemässe Vorrichtung als Anschlussdose ausgebildet. Die Erfindung beschränkt sich aber nicht nur auf Anschlussdosen, sondern schliesst alle möglichen Arten von Befestigungsvorrichtungen und Verbindungen für sanitäre Armaturen ein, so zum Beispiel auch Verbindungsstücke zwischen zwei fluidführenden Systemen. Dabei können keine, eine oder auch mehrere Schichten, zum Beispiel schalldämmende oder feuerfeste Schichten, zwischen dem Halteteil und dem fluidführenden Teil vorhanden sein. Je nach Konfiguration des fluidführenden Teils können nur zwei Halteringe oder aber mehr als drei Halteringe vorhanden sein.

In den Ausführungsformen sind die Halteschalen als Einzelteile ausgebildet. Es ist aber auch vorstellbar, dass diese Halteschalen insbesondere mittels Scharnier, Lasche oder dergleichen zusätzlich miteinander verbunden sind.

Auch wenn grundsätzlich keine Schrauben, Klebstoffe oder dergleichen für das Zusammenhalten notwendig sind, können die Halteschalen zusätzlich zu den Halteringen auch noch geklebt, geschweisst, verschraubt oder sonst in einer bekannten Form zusammengehalten werden.

In den Ausführungsbeispielen werden die Halteringe ohne weitere adhäsive Mittel, wie Kleben oder Schweissen, in die Aufnahmen eingesetzt. Durch die Wahl geeigneter Materialien, die beispielsweise eine entsprechende Elastizität aufweisen, ist die Reibung zwischen den Halteringen und den Aufnahmen ausreichend, so dass die Halteringe sich nicht aus den Aufnahmen lösen können. Selbstverständlich ist es aber auch möglich, die Halteringe in die Aufnahmen zu kleben oder zu schweissen. Es ist zudem vorstellbar, dass die Halteringe und/oder die Aufnahmen eine Strukturierung, zum Beispiel eine sägezahnförmige Struktur, aufweisen, die verhindert, dass ein eingesetzter Haltering sich aus der Ausnahme lösen kann.

Im Ausführungsbeispiel ermöglicht die schalldämmende Schicht eine Vorspannung der Anschlussdose. Eine solche Vorspannung ist zwar durchaus erwünscht, sie ist aber nicht zwingend notwendig. Zudem können auch eine oder mehrere nicht schalldämmende Schichten zwischen dem Halteteil und dem fluidführenden Teil vorhanden sein, die zu einer Vorspannung der Vorrichtung führen. Zudem ist auch vorstellbar, dass die Halteringe eine gewisse Elastizität besitzen, so dass sie beim Einsetzen ausgeweitet werden müssen und sich dann, nach dem Einsetzen in die Aufnahmen, wieder zusammenziehen. Zudem ist es auch möglich, dass die Halteringe eine Behandlung erfahren, zum Beispiel erhitzt werden, und sich dabei ausdehnen. Im ausgedehnten Zustand werden sie dann in die Aufnahmen eingesetzt. Danach ziehen sich die Halteringe wieder zusammen, zum Beispiel nachdem sie wieder ausgekühlt sind. Dieses Zusammenziehen bewirkt ebenfalls eine Vorspannung der Vorrichtung.

Die Ausführungsbeispiele behandeln Anschlussdosen, die an eine Wand mittels Schrauben oder dergleichen befestigt werden. Es ist aber auch vorstellbar, dass die Anschlussdose direkt in eine Wand eingegossen wird. Dabei besteht die Anschlussdose immer noch aus den Teilen fluidführendes Teil und Halteteil, wobei optional eine weitere, zum Beispiel eine schalldämmende Schicht dazwischen angeordnet sein kann.

Neben dem in den Ausführungsbeispielen erwähnten Dosenfuss mit einem umgebogenen, unteren Ende ist auch ein Dosenfuss vorstellbar, dessen unteres Ende nicht umgebogen ist. So kann das Ende eine normale Wandungsdicke aufweisen. Es ist aber auch möglich, das untere Ende mit einer dickeren Wandung zu versehen. Dabei kann das Ende sowohl flexibel als auch starr sein. Eine solche dickere Wandung kann die Funktion des umgebogenen Endes übernehmen.

Die Beweglichkeit des unteren Endes des Dosenfusses wird in den Ausführungsbeispielen dadurch erreicht, dass die Wandung des Dosenfusses dünner ist als beim starren, oberen Ende. Der Wechsel von dicker Wandung zur dünner Wandung kann, wie in den Zeichnungen ersichtlich ist, diskret in einer oder in mehreren Stufen erfolgen. Dieser Wechsel kann aber auch kontinuierlich erfolgen. Dabei kann der Wechsel sowohl über die ganze Länge des Dosenfusses erfolgen oder auch nur über einzelne Teile der Länge des Dosenfusses. Es ist auch vorstellbar, dass eine Segmentierung des Dosenfusses von abwechselnd beweglichen und starren Segmenten vorhanden ist.

Im Ausführungsbeispiel ist bei den Halteschalen eine Rippe ausgebildet welche eine Verjüngung der schalldämmenden Schicht ausfüllt. Es ist vorstellbar, dass die schalldämmende Schicht an dieser Stelle ganz unterbrochen ist und die Rippe direkten Kontakt mit dem fluidführenden Teil hat. Andererseits kann auch gänzlich auf eine solche Rippe, respektive Verjüngung verzichtet werden. Es ist ebenfalls möglich, dass diese Rippe nicht wie im Ausführungsbeispiel durchgehend das fluidführende Teil umlauft, sondern nur stückweise ausgebildet ist. Dabei kann sowohl stückweise eine Verjüngung der schalldämmenden Schicht vorhanden sein als auch die schalldämmende Schicht stückweise unterbrochen sein.

Zusammenfassend ist festzustellen, dass durch die Erfindung eine fluidführende Vorrichtung geschaffen wird, welche einfach zusammensetzbar ist und ein sicheres Halten eines fluidführenden Teils durch einen Halteteil ermöglicht.

## Patentansprüche

1. Fluidführende Vorrichtung (100) umfassend ein Halteteil (110) und einen festen fluidführenden Teil (130), wobei der Halteteil (110) mindestens zwei Halteschalen (111, 112) umfasst, der fluidführende Teil (130) von den Halteschalen (111, 112) umschlossen ist und die mindestens zwei Halteschalen (111, 112) mittels mindestens zwei Halteringen (141, 142, 143) mechanisch zusammengehalten werden, **dadurch gekennzeichnet, dass** Aufnahmen (115, 116, 117) an den Halteschalen (111, 112) ausgebildet sind, welche die Halteringe (141, 142, 143) aufnehmen können, wobei in zusammengesetztem Zustand der Vorrichtung (100) die Aufnahmen (115, 116, 117) im Bereich von freien Enden (131a, 132a) des fluidführenden Teils (130) angeordnet sind und wobei die Halteringe (141, 142, 143) in die Aufnahmen (115, 116, 117) einpressbar sind um das Halteteil (110) mechanisch zusammenzuhalten.

2. Vorrichtung (100) nach Anspruch 1, **dadurch gekennzeichnet, dass** zwischen den Halteschalen (111, 112) und dem fluidführenden Teil (130) eine Schicht (120) geringerer Härte, insbesondere eine schalldämmende Schicht, vorhanden ist.

3. Vorrichtung (100) nach Anspruch 1 oder 2, **dadurch gekennzeichnet, dass** die Vorrichtung (100) eine Anschlussdose zur Montage von sanitären Armaturen ist.

4. Vorrichtung {100} nach Anspruch 3, **dadurch gekennzeichnet, dass** die Anschlussdose (100) als eine Doppeldose ausgebildet ist.

5. Vorrichtung (100) nach einem der Ansprüche 1 bis 4, **dadurch gekennzeichnet, dass** die Vorrichtung (100) einen Steckanschluss oder einen Pressanschluss hat.

6. Vorrichtung (100) nach einem der Ansprüche 1 bis 5, **dadurch gekennzeichnet, dass** die Halteringe (141, 142, 143) flexibel sind, insbesondere dass sie ein Formgedächtnis besitzen.

7. Vorrichtung (100) nach einem der Ansprüche 1 bis 6, **dadurch gekennzeichnet, dass** das fluidführende Teil (130) als Rohr ausgebildet ist.

8. Vorrichtung (100) nach einem der Ansprüche 1 bis 7, **dadurch gekennzeichnet, dass** das feste, fluidführende Teil (130) aus Metall, insbesondere Rotguss, hergestellt ist.

9. Vorrichtung (100) nach einem der Ansprüche 1 bis 8, **dadurch gekennzeichnet, dass** die Halteschalen (111, 112) aus Kunststoff sind.

10. Vorrichtung (100) nach einem der Ansprüche 1 bis 9, **dadurch gekennzeichnet, dass** die Halteringe (141, 142, 143) aus Kunststoff, insbesondere PEX, hergestellt sind.

11. Vorrichtung (100) nach einem der Ansprüche 1 bis 10, **dadurch gekennzeichnet, dass** die Halteschalen (141, 142, 143) im Wesentlichen einen Querschnitt in der Form eines Kreisringsegments, insbesondere eines Halbkreisringsegments, haben.

12. Vorrichtung (100) nach einem der Ansprüche 1 bis 11, **dadurch gekennzeichnet, dass** die Vorrichtung (100) eine Anschlussdose mit einem abgewinkeltem fluidführenden Teil (130) ist, wobei zwei Halteringe (141, 142) je stirnseitig und ein Haltering (143) an einer Montage der Anschlussdose (100) angebracht ist.

13. Verfahren zur Montage einer Vorrichtung (100) nach den Ansprüchen 1 bis 12 umfassend mindestens zwei Halteschalen (111, 112), einen fluidführenden Teil (130) und mindestens zwei Halteringe (141, 142, 143), **dadurch gekennzeichnet, dass** Aufnahmen (115, 116, 117) an den Halteschalen (111, 112) ausgebildet sind, welche die Halteringe (141, 142, 143) aufnehmen können, wobei in zusammengesetztem Zustand der Vorrichtung (100) die Aufnahmen (115, 116, 117) Im Bereich von freien Enden (131a, 132a) des fluidführenden Teils (130) angeordnet sind, und wobei die Halteschalen (111, 112) das fluidführende Teil (130) umschliessend zu einem Halteteil (110) zusammengefügt werden und danach die Halteringe (141, 142, 143) derart in die Aufnahmen eingepresst, werden, dass sie das Halteteil (110) mechanisch zusammenhalten.

## Claims

1. Fluid-conducting device (100) comprising a holding part (110) and a fixed fluid-conducting part (130), wherein the holding part (110) comprises at least two holding shells (111, 112), the fluid-conducting part (130) is enclosed by the holding shells (111, 112), and the at least two holding shells (111, 112) are held mechanically together by means of at least two holding rings (141, 142, 143), **characterized in that** receptacles (115, 116, 117) which are able to receive the holding rings (141, 142, 143) are formed on the holding shells (111, 112), wherein, in the assembled state of the device (100), the receptacles (115, 116, 117) are arranged in the region of free ends (131a, 132a) of the fluid-conducting part (130), and wherein the holding rings (141, 142, 143) are pressable into the receptacles (115, 116, 117) in order to hold the holding part (110) mechanically together.

2. Device (100) according to Claim 1, **characterized in that** a layer (120) of lower hardness, in particular a sound insulating layer, is present between the holding shells (111, 112) and the fluid-conducting part (130).

3. Device (100) according to Claim 1 or 2, **characterized in that** the device (100) is a convector for assembling sanitary fittings.

4. Device (100) according to Claim 3, **characterized in that** the connector (100) is configured as a double connector.

5. Device (100) according to one of Claims 1 to 4, **characterized in that** the device (100) has a plug connection or a press convection.

6. Device (100) according to one of Claims 1 to 5, **characterized in that** the holding rings (141, 142, 143) are flexible, in particular **in that** they have shape memory.

7. Device (100) according to one of Claims 1 to 5, **characterized in that** the fluid conducting part (130) is configured as a pipe.

8. Device (100) according to one of Claims 1 to 7, **characterized in that** the fixed, fluid-conducting part (130) is produced from a metal, in particular red brass.

9. Device (100) according to one of Claims 1 to 8, **characterized in that** the holding shells (111, 112) are made of plastics material.

10. Device (100) according to one of Claims 1 to 9, **characterized in that** the holding rings (141, 142, 143) are produced from plastics material, in particular PEX.

11. Device (100) according to one of Claims 1 to 10, **characterized in that** the holding shells (141, 142, 143) has substantially a cross section in the form of a circular ring segment, in particular of a semicircular ring segment.

12. Device (100) according to one of Claims 1 to 11, **characterized in that** the device (100) is a connector having an angled fluid-conducting part (130), wherein two holding rings (141, 142) are attached one at each end and one holding ring (143) is attached to an assembly of the connector (100).

13. Method for assembling a device (100) according to Claims 1 to 12 comprising at least two holding shells (111, 112), a fluid-conducting part (130) and at least two holding rings (141, 142, 143), **characterized in that** receptacles (115, 116, 117) which are able to receive the holding rings (141, 142, 143) are formed on the holding shells (111, 112), wherein, in the assembled state of the device (100), the receptacles (115, 116, 117) are arranged in the region of free ends (131a, 132a) of the fluid-conducting part (130), and wherein the holding shells (111, 112) are joined together, surrounding the fluid-conducting part (130), so as to form a holding part (110), and subsequently the holding rings (141, 142, 143) are pressed into the receptacles such that they hold the holding part (110) mechanically together.

## Revendications

1. Dispositif conducteur de fluide (100), comprenant une partie de retenue (110) et une partie fixe conductrice de fluide (130), la partie de retenue (110) comprenant au moins deux coques de retenue (111, 112), la partie conductrice de fluide (130) étant entourée par les conques de retenue (111, 112) et les au moins deux coques de retenue (111, 112) étant retenues mécaniquement ensemble au moyen d'au moins deux bagues de retenue (141, 142, 143), **caractérisé en ce que** des logements (115, 116, 117) sont réalisés au niveau des coques de retenue (111, 112), lesquels peuvent recevoir les bagues de retenue (141, 142, 143), les logements (115, 116, 117), dans l'état assemblé du dispositif (100), étant disposés dans la région d'extrémités libres (131a, 132a) de la partie conductrice de fluide (130) et les bagues de retenue (141, 142, 143) pouvant être pressées dans les logements (115, 116, 117) afin de retenir ensemble mécaniquement la partie de retenue (110).

2. Dispositif (100) selon la revendication 1, **caractérisé en ce qu'**entre les coques de retenue (111, 112) et la partie conductrice de fluide (130) est prévue une couche (120) de plus faible dureté, en particulier une couche insonorisante.

3. Dispositif (100) selon la revendication 1 ou 2, **caractérisé en ce que** le dispositif (100) est une boîte de raccordement pour le montage de robinets sanitaires.

4. Dispositif (100) selon la revendication 3, **caractérisé en ce que** la boîte de raccordement (100) est réalisée sous forme de double boîte.

5. Dispositif (100) selon l'une quelconque des revendications 1 à 4, **caractérisé en ce que** le dispositif (100) présente un raccord par enfichage ou un raccord par pression.

6. Dispositif (100) selon l'une quelconque des revendications 1 à 5, **caractérisé en ce que** les bagues de retenue (141, 142, 143) sont flexibles, en particulier **en ce qu'**elles possèdent une mémoire de forme.

7. Dispositif (100) selon l'une quelconque des revendications 1 à 6, **caractérisé en ce que** la partie conductrice de fluide (130) est réalisée sous forme de tube.

8. Dispositif (100) selon l'une quelconque des revendications 1 à 7, **caractérisé en ce que** la partie fixe conductrice de fluide (130) est fabriquée en métal, en particulier en laiton rouge.

9. Dispositif (100) selon l'une quelconque des revendications 1 à 8, **caractérisé en ce que** les coques de retenue (111, 112) sont fabriquées en plastique.

10. Dispositif (100) selon l'une quelconque des
revendications 1 à 9, **caractérisé en ce que** les bagues de retenue (141, 142, 143) sont fabriquées en plastique, en particulier en PEX.

11. Dispositif (100) selon l'une quelconque des revendications 1 à 10, **caractérisé en ce que** les coques de retenue (141, 142, 143) présentent essentiellement une section transversale en forme de segment de cercle annulaire, en particulier en forme de segment de demi-cercle annulaire.

12. Dispositif (100) selon l'une quelconque des revendications 1 à 11, **caractérisé en ce que** le dispositif (100) est une boîte de raccordement avec une partie conductrice de fluide coudée (130), deux bagues de retenue (141, 142) étant chacune montées du côté frontal et une bague de retenue (143) étant montée au niveau d'un montage de la boite de raccordement (100).

13. Procédé de montage d'un dispositif (100) selon les revendications 1 à 12, comprenant au moins deux coques de retenue (111, 112), une partie conductrice de fluide (130) et au moins deux bagues de retenue (141, 142, 143), **caractérisé en ce que** des logements (115, 116, 117) sont réalisés au niveau des coques de retenue (111, 112), lesquels peuvent recevoir les bagues de retenue (141, 142, 143), les logements (115, 116, 117), dans l'état assemblé du dispositif (100), étant disposés dans la région d'extrémités libres (131a, 132a) de la partie conductrice de fluide (130), et les coques de retenue (111, 112) entourant la partie conductrice de fluide (130) étant assemblées pour former une partie de retenue (110) et les bagues de retenue (141, 142, 143) étant ensuite pressées dans les logements de telle sorte qu'elles retiennent ensemble mécaniquement la partie de retenue (110).
